# EUROPEAN PATENT APPLICATION

(11) **EP 1 077 103 A2**
(43) Date of publication of application: **21.02.2001**
(21) Application number: 00306811.1
(22) Date of filing: 09.08.2000
(51) Int. Cl.: B23K 11/24, B23K 11/25, B23K 11/00, H02K 13/04, H01R 43/02

(54) **Fusing processing method and apparatus**

(30) Priority: 18.08.1999 JP 23120999
(71) Applicant: MIYACHI TECHNOS CORPORATION, Noda-shi, Chiba-ken (JP)
(72) Inventor: Mukai, Ren, Noda-shi, Chiba-ken (JP); Abe, Masayuki, Noda-shi, Chiba-ken (JP)
(74) Representative: Spall, Christopher John

(57) **Abstract**

A control unit first enters a schedule No. (code) desired by a user for a given workpiece (step B₁). The control unit then identifies the entered schedule No. to read set values of various working conditions being managed by that schedule No. from a memory, and sets them into predetermined registers (steps B₂, B₃). Working condition set values in an associated work section are particularly set (step B₄). Then, in response to a start signal from an external device or to a start signal input by the user, the control unit executes a single fusing work (steps B₅, B₆). After completion of the single fusing work, the control unit increments a section work point counter by one (step B₇). Then, until reaching the set count of the work points defined in that section, the control unit reiterates the fusing work on the subsequent work points in totally the same working conditions as the above (steps B₈ → B₄ to B₇ → B₈).

## Description

### BACKGROUND OF THE INVENTION

### 1. Field of the Invention

The present invention relates to a fusing technique for jointing workpieces together by use of Joule heat and an applied force.

### 2. Description of the Related Arts

A fusing (thermocompression jointing) work has hitherto been used for jointing a DC motor armature winding and a commutator together. In case of typical medium or larger-sized DC motors, the armature winding is composed of a multiplicity of insulatingly covered preformed coils, with major parts of the coils being received within slots in an armature core, and with coil lead end portions projecting from the slots being joined to associated commutator bars. The commutator has a corresponding number of commutator bars to the number (N) of the coils, the commutator bars being circumferentially arranged to form a cylinder. Thus, jointing (fusing work) of the coil lead end portions to commutator bars is repeated N times to make a round of the circumference of the commutator, to finish the armature winding.

In such a conventional fusing processing method, set values of various working conditions (fusing time, current value, etc.) for the fusing work were managed by a schedule for each work point. For this reason, in case of the workpieces such as the above armature having a multiplicity of work points, a great number of schedules were needed, with the result that the user's schedule management became cumbersome and additionally that the number of the schedules the user (operator) wanted to use often exceeded the maximum of the number of schedules the apparatus was able to of set.

In some workshops, a single fusing machine had to handle multiple sorts of workpieces. In such an event, the number of the schedules the user wanted to use (set) was increased to a large extent, and the above deficiencies became more evident.

### SUMMARY OF THE INVENTION

The present invention was conceived in view of the above problems. It is therefore the object of the present invention to provide a fusing processing method and apparatus capable of enhancing the efficiency of schedule management of fusing works on a multiplicity of or multiple sorts of work points, to thereby improve the workability or productivity.

In order to achieve the above object, according to a first aspect of the present invention there is provided a fusing processing method for sequentially performing fusing works of a set of work points on a workpiece, the fusing processing method comprising the steps of setting one or more schedules for collectively managing working conditions of the fusing works on the set of work points; setting desired values of the working conditions for each of the set of work points on the schedule-by-schedule basis; storing set values of the work conditions into a memory for each of the set schedules; selecting desired one from the schedules for a set of work points on a given workpiece; and reading set values of the working conditions corresponding to the selected schedule from the memory, to execute a fusing work on each of the set of work points on the given workpiece, in accordance with the working condition set values corresponding thereto.

According to a second aspect of the present invention there is provided a fusing processing apparatus for sequentially performing fusing works of a set of work points on a workpiece, the fusing processing apparatus comprising schedule setting means for setting one or more schedules for collectively managing working conditions of the fusing works on a predefined set of work points; condition setting means for setting desired values of the working conditions for each of the set of work points on the schedule-by-schedule basis; storage means for storing set values of the working conditions for each of the set schedules; entry means for entering a schedule selection signal for selecting desired one of the schedules for a set of work points on a given workpiece; and fusing means for reading set values of the working conditions corresponding to the selected schedule from the storage means, to execute a fusing work on each of the set of work points on the given workpiece, in accordance with the working condition set values corresponding thereto.

In a fusing processing apparatus of the present invention, the condition setting means preferably include a first condition setting unit for allowing a setting of a common value on the set of work points with respect to a predetermined first working condition; and a second condition setting unit for allowing a setting of separate values on the set of work points with respect to a predetermined second work condition.

As a preferred mode, the condition setting means may include a section defining unit for dividing the set of work points into a plurality of sections by any arbitrary number; and a section condition setting unit for allowing a setting of a value for each of the sections with respect to predetermined working conditions.

Preferably, the fusing means include a pair of electrodes at least one of which comes into pressure contact with metallic members disposed at their respective work points during a fusing work; a rectifying circuit for rectifying an AC voltage of a commercial frequency into a DC voltage; an inverter for converting the DC voltage output from the rectifying circuit during each current-supplying time for a fusing work, into a pulsed voltage of a high frequency; inverter control means for dividing the current-supplying time into a plurality of unit current-supplying periods so that the high-frequency pulses are output with one polarity during odd-numbered unit current-supplying periods but that the high-frequency pulses are output with the other polarity during even-numbered unit current-supplying periods; and a transformer having a primary winding electrically connected to output terminals of the inverter and having a secondary winding electrically connected to the pair of electrodes, the transformer serving to flow a secondary current with one polarity via the electrodes to the metallic members during odd-numbered unit current-supplying periods, the transformer serving to flow a secondary current with the other polarity via the electrodes to the metallic members during the even-numbered unit current-supplying periods.

### BRIEF DESCRIPTION OF THE DRAWINGS

The above and other objects, aspects, features and advantages of the present invention will become more apparent from the following detailed description when taken in conjunction with the accompanying drawings, in which:
FIGs. 1A and 1B are a perspective view of a rotor of a DC motor and an enlarged perspective view of a commutator bar and coil lead end portions associated therewith, respectively;
FIG. 2 is a schematic side elevational view showing a fusing processing method for joining the commutator bar and the coil lead end portions of the armature of the DC motor rotor of FIGs. 1A and 1B;
FIGs. 3A and 3B are enlarged fragmentary schematic front elevational views showing the fusing processing method;
FIG. 4 is a schematic front elevational view showing the fusing processing method;
FIG. 5 is a block diagram showing a configuration of the principal part of a fusing processing apparatus in accordance with an embodiment of the present invention;
FIG. 6 is a front elevational view of a program unit of the fusing processing apparatus of the embodiment;
FIG. 7 is a waveform diagram showing a basic sequence of a single fusing work effected by the fusing processing apparatus of the embodiment;
FIGs. 8A and 8B are waveform diagrams showing an AC inverter-based current-supplying method of the embodiment;
FIG. 9 is a drawing showing the contents of display (initial values) on a "schedule" screen of the embodiment;
FIG. 10 is a flowchart showing a procedure of entry of set values effected by the fusing processing apparatus of the embodiment;
FIG. 11 is a drawing showing an example of setting on the "schedule" screen of the embodiment;
FIG. 12 is a drawing showing another example of setting on the "schedule" screen of the embodiment;
FIG. 13 shows by way of example the contents of display (initial values) on a "stepper set" screen of the embodiment;
FIG. 14 shows an example of setting on the "stepper set" screen of the embodiment;
FIG. 15 shows the example of setting of FIG. 14 in the form of graphics;
FIG. 16 is a flowchart showing a procedure of processings effected by a control unit for fusing works on a single workpiece in the embodiment; and
FIG. 17 is a flowchart showing a procedure of processings effected by the control unit for a single fusing processing in the embodiment.

### DESCRIPTION OF THE PREFERRED EMBODIMENTS

The present invention will now be described with reference to the accompanying drawings which illustrate presently preferred embodiments thereof in a non-limitative fashion.

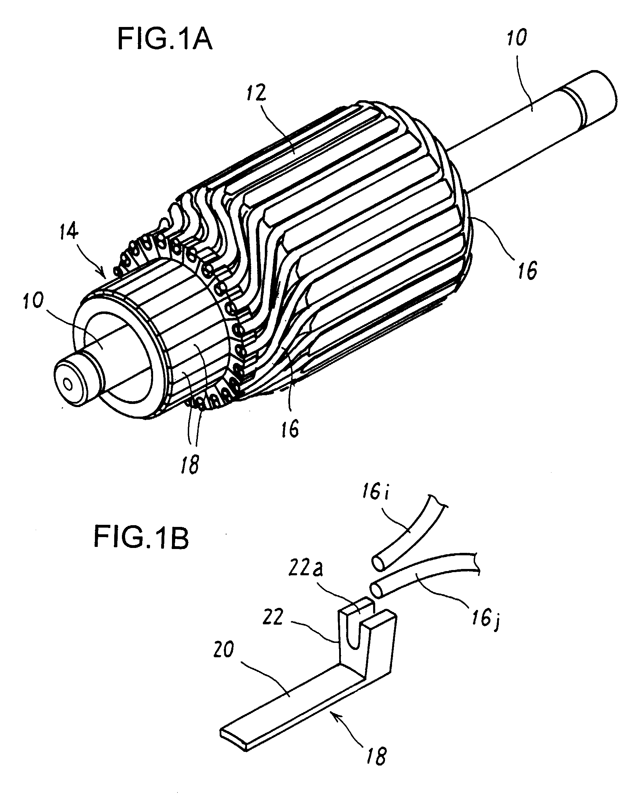

Referring first to FIGs. 1 to 4, description is made of a fusing processing method effected in the assembly of an armature of a DC motor by way of example of application of the present invention.

FIG. 1A shows one example of a rotor of the DC motor. A core (armature core) 12 and a commutator 14 are firmly secured to a motor shaft 10, with the core 12 having a multiplicity of slots adapted to receive a multiplicity of insulatingly covered preformed coils 16 that are arranged in drum winding to constitute the armature winding. The commutator 14 comprises a multiplicity of commutator bars 18 which are made of copper or a copper alloy and each include, as shown in FIG. 1B, an axially extending brush contact portion 20 and a terminal portion 22 that protrudes radially from the base end of the brush contact portion 20. The terminal portion 22 has at its extremity a slot 22a adapted to receive, one on top of the other, a coil lead end portion 16i projecting from the slot of the core 14 toward the commutator 14, of a former-wound coil 16 associated with the commutator bar 18 having the slot 22a, and a coil lead end portion 16j of another predetermined former-wound coil 16.

For the purpose of assembling the thus constructed armature, a fusing work is applied to the two coil lead end portions 16i and 16j received within the slot 22a of each commutator bar 18 to thereby joint the two coil lead end portions 16i and 16j to the terminal portion 22.

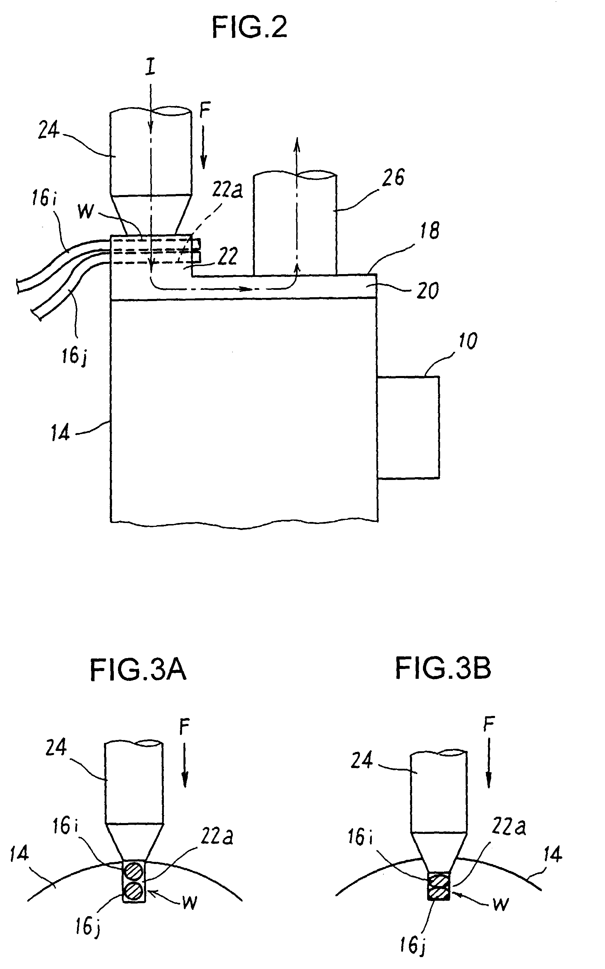

More specifically, as shown in FIG. 2, a high heat-generating electrode 24 made of, e.g., tungsten is pressed with a predetermined applied force F against the coil lead end portions 16i and 16j received within the slot 22a in the terminal portion 22 of each commutator bar 18, while simultaneously a low heat-generating electrode 26 made of, e.g., chromium copper is abutted against the brush contact portion 20 so that an appropriate voltage is applied between the two electrodes 24 and 26 to allow a current I to flow through work points W (16i, 16j, 22). Due to the presence of insulating films covering the coil lead end portions 16i and 16j, no current can flow therethrough immediately after the initiation of current-supplying, but instead the current I will detour around the slot 22a in the terminal portion 22. Then, the electrode 24 and the terminal portion 22 evolve thermal energies with Joule effect, with the result that the insulating films of the coil lead end portions 16i and 16j melt and coil conductors thereof are exposed. Afterwards, the current I from the electrode 24 can flow through the coil conductors of the coil lead end portions 16i and 16j. While being subjected to the applied force F by the electrode 24, the coil lead end portions 16i and 16j are heated by their own Joule heat and Joule heat of the electrode 24 and the terminal end 22, so that they are cohesively jointed to the terminal portion 22 as shown in FIGs. 3A and 3B.

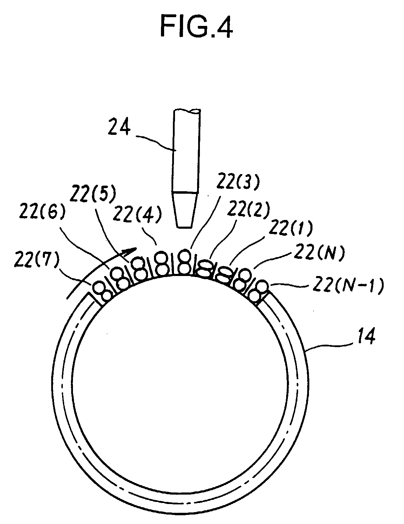

Such a fusing work is carried out for each commutator bar 18. Thus, if the commutator 14 includes a total of N (e.g., 36) commutator bars 18, then the above fusing work is iterated N (36) times with a predetermined machine fusing cycle time while rounding the armature as shown in FIG. 4.

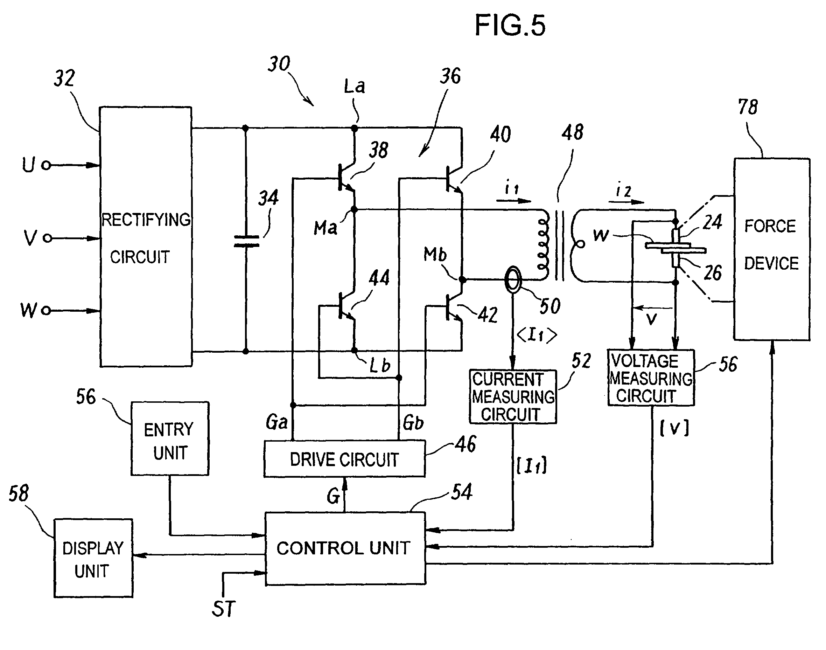

FIG. 5 shows a configuration of the principal part of a fusing processing apparatus in accordance with an embodiment of the present invention. The fusing processing apparatus comprises a power supply unit 30 in the form of an AC power supply including an inverter 36.

The inverter 36 includes four transistor switching elements 38, 40, 42 and 44 comprised of, e.g., GTRs (giant transistors) or IGBT (insulated gate bipolar transistors).

Among the four switching elements 38 to 44, a first set of (positive side) switching elements 38 and 42 are simultaneously subjected to a switching (ON/OFF) control at a predetermined inverter frequency (e.g., 10 kHz) in response to a first inverter control signal Gₐ from a drive circuit 46, whilst a second set of (negative side) switching elements 40 and 44 simultaneously undergo a switching control at the inverter frequency in response to a second inverter control signal G_{b} from the drive circuit 46.

The inverter 36 is provided with input terminals (Lₐ and L_{b}) electrically connected to output terminals of a rectifying circuit 32 and with output terminals (Mₐ and M_{b}) electrically connected to opposed ends of a primary coil of a step-down transformer 48. A pair of electrodes, e.g., the electrodes 24 and 26 of FIGs. 2 and 3 are electrically connected to opposed ends of a secondary coil of the transformer 48 via only a secondary conductor without any intervention of a rectifying circuit. The work points W (16i, 16j, 22) to be inseparably fused together are disposed between the two electrodes 24 and 26.

The rectifying circuit 32 is a three-phase rectifier consisting of e.g., six (6) diodes that are three-phase bridge connected to one another. The rectifying circuit 32 converts a three-phase AC voltage at a commercial frequency (50Hz or 60Hz) from three-phase AC power supply terminals (U, V and W), into a DC voltage. The DC voltage output from the rectifying circuit 32 is applied via a smoothing capacitor 34 to the inverter 36.

A current sensor 50 comprised of, e.g., a current transformer is attached to the conductor extending between one output terminal M_{b} of the inverter 36 and the primary coil of the transformer 48. During the current supply for a fusing work, the current sensor 50 issues a current detection signal 〈Ii〉 indicative of an instantaneous value of a primary current i₁ having a waveform similar to that of a secondary current i₂ (fusing current I) that flows through the secondary circuit. For each switching cycle of the inverter, a current measuring circuit 52 figures out or measures, as a current measured value [I₁], an effective value, an average value, or a peak value of the current i₁ on the basis of the current detection signal 〈I₁〉 from the current sensor 50 and feeds the thus obtained current measured value [I₁] to a control unit 54.

On the secondary side of the transformer 48 there is disposed a voltage measuring circuit 56 for measuring, as, e.g., the effective value, a voltage V between the two electrodes 24 and 26. An interelectrode voltage measured value [V] from the voltage measuring circuit 56 is also fed to the control unit 54.

The control unit 54 is comprised of a microcomputer that includes a CPU (central processing unit), a ROM (program memory), a RAM (data memory), a clock circuit and an interface circuit. The control unit 54 provides all controls effected within the apparatus, for example, force control, current control and their sequence controls in the fusing work, exercises management of setting entries and registrations associated with set values of various conditions, and performs computing and outputting of measured values and judged values, etc. In this embodiment a single fusing work is executed in response to a start signal ST from an external apparatus not shown.

An entry unit 57 is comprised of entry devices such as a keyboard and a mouse, for use in setting entries of various conditions for the fusing work. A display unit 58 is comprised of an LCD or LEDs, for the display of set values, measured values, judged values, etc.

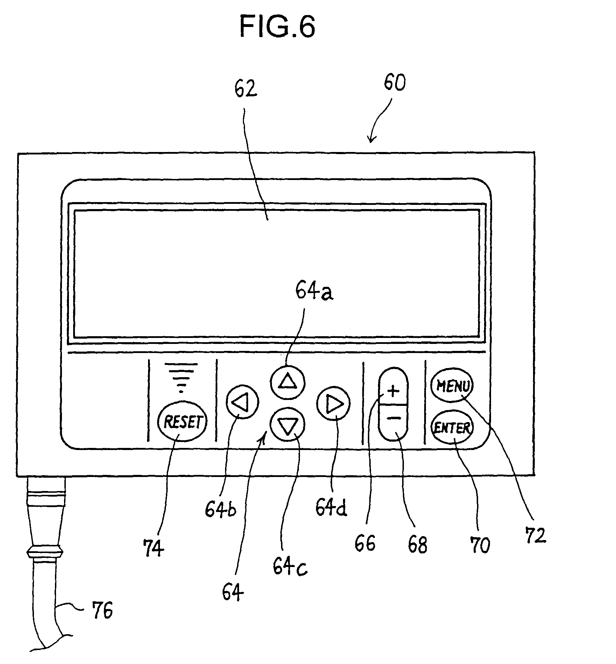

In this embodiment the entry unit 57 and the display unit 58 are incorporated into a program unit 60 that is diagrammatically depicted in FIG. 6.

As can be seen in Fig. 6 the program unit 60 comprises a display, e.g., a liquid crystal display 62 of the display unit 58 disposed centrally on the front surface of the program unit 60, and function keys (buttons) 64 to 74 arranged below the liquid crystal display 62. In this embodiment the function keys (buttons) include cursor keys 64a to 64d, a plus (+) key 66, a minus (-) key 68, an enter key 70, a menu key 72, and a reset button 74.

The cursor keys 64a to 64d are keys for moving a cursor in vertical and horizontal directions on a screen. When one of the keys 64a to 64d is pressed, the cursor can move in the direction of the arrow indicated by that key.

The plus (+) key 66 and the minus (-) key 68 are data entry keys used when the user sets desired values for various operative conditions on a "schedule" screen or a "stepper set" screen as will be described later.

The enter key 70 is a key for loading display data at a cursor position into a memory as definite set data. The menu key 72 is a key for selecting a screen mode of the apparatus. The reset button 74 is used to cancel an "error message" screen not shown appearing on the display 62 upon the occurrence of any trouble.

The program unit 60 is arranged to interchange signals or data with the control unit 54 in the main unit not shown by way of an electrical cable or optical cable 76. Arrangement may otherwise be such that a console panel equivalent in its entry and display functions to such a program unit 60 is integrated into the main unit.

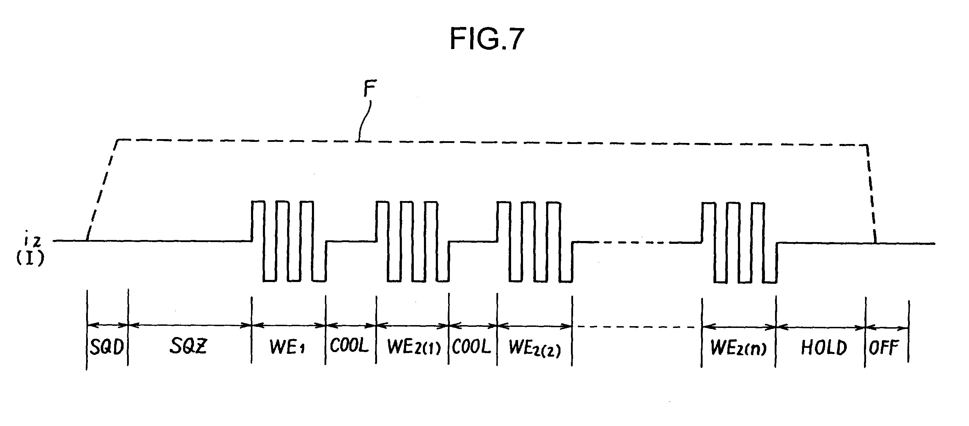

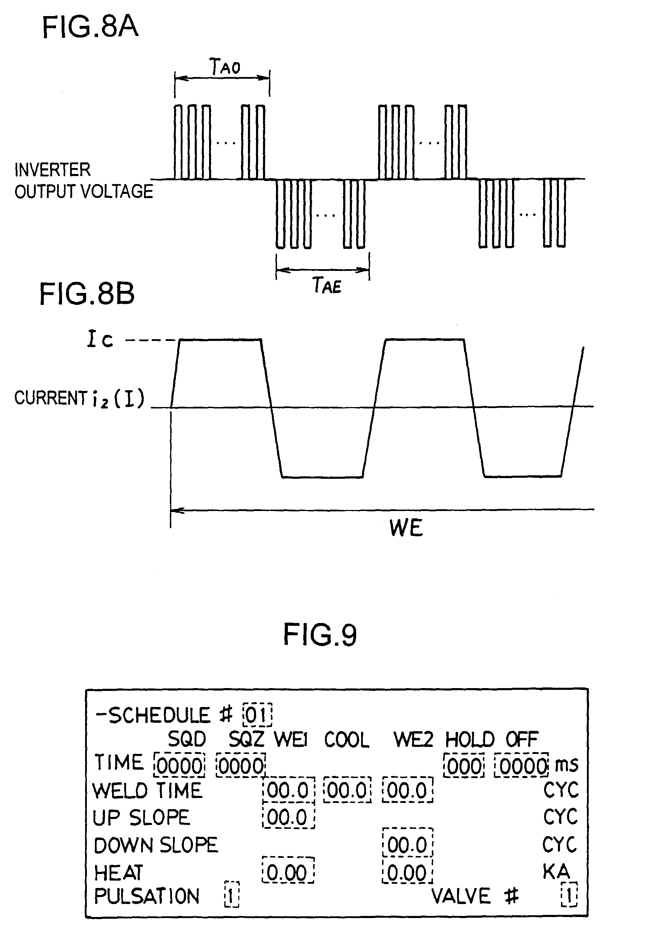

Herein, reference is made to FIGs. 7, 8A and 8B to describe a basic sequence of the fusing work in this embodiment.

As can be seen in FIG. 7, the sequence of the fusing work in this embodiment is such that a pressure device 78 continues to exert a predetermined applied force F on a workpiece W from beginning to end of the fusing process under the control of the control unit 54 while simultaneously the power supply unit 30 flows a fusing current I (i₂) between the two electrodes 24 and 26 during a previously set fusing time WE within a force time.

More specifically, during the force time, sequential selection is made of a squeeze delay time [SQD], a squeeze time [SQZ], a first fusing time [WE₁], a cooling time [COOL], a second fusing time [WE₂], a holding time [HOLD] and a release time [OFF].

In the squeeze time [SQZ] the applied force F presented by the electrodes (especially electrode 24 in case of this embodiment) is stabilized so as to confer a better sticking property on the metallic material at the work points W. The squeeze delay time [SQD] adjusts the length of the squeeze time [SQZ]. In the first fusing time [WE₁] the insulating films at the work points W (insulating films of the coil lead end portions 16i and 16j in case of this embodiment) are mainly melted for removal. The cooling time [COOL] is an idle time required to achieve a better finish of processing. In the second fusing time [WE₂] the metallic materials at the work points W are mainly heated and fused. Pulsation mode of this embodiment allows the second fusing time [WE₂] accompanied by the cooling time [COOL] to be iterated by any optional number of times (n times). The holding time [HOLD] is a time during which the metallic materials at the work points W become solidified while the force of the electrodes is held at a certain value after the termination of the current supply. The release time [OFF] is a time during which the electrodes are temporarily released from the work points W in a single fusing work.

As is apparent from FIG. 7, each fusing time WE of this embodiment allows an AC secondary current i₂ (I) having a rectangular waveform (more precisely a trapezoidal waveform) to flow by the set number of cycles at a predetermined secondary side AC frequency (e.g., commercial frequency). On the primary side during the current supply, as will be described hereinbelow, the positive side switching elements 38, 42 and the negative side switching elements 40, 44 effect alternate switching (ON/OFF) operations at the inverter frequency on a half-cycle basis, under the switching control of the control unit 54.

FIGs. 8A and 8B show an AC inverter-based welding current control method in accordance with this embodiment. In this method, a single continuous fusing time WE is defined by the number of cycles of the secondary side AC frequency (e.g., commercial frequency). That is, the fusing time WE is defined as integer multiples of the fusing period T_{A} corresponding to a half cycle of the secondary side AC frequency.

In each fusing time WE, the control unit 54 causes the positive side switching elements 38 and 42 to perform continuous switching operations at the inverter frequency while keeping the negative side switching elements 40 and 44 OFF in odd-numbered fusing periods T_{AO} of a plurality of fusing periods T_{A} constituting the fusing time WE, whereas it causes the negative side switching elements 40 and 44 to perform continuous switching operations at the inverter frequency while keeping the positive side switching elements 38 and 42 OFF in even-numbered fusing periods T_{AE}.

This allows a secondary current i₂, namely a fusing current I having a substantially trapezoidal current waveform to flow through the secondary circuit of the power supply apparatus in the positive direction in the odd-numbered fusing periods T_{AO}, but in the negative direction in the even-numbered fusing periods T_{AE}. Using the current measured value [I₁] from the current measuring circuit 52 as a feedback signal, the control unit 54 provides a variable control of the pulse width of the switching pulse at the inverter frequency preferably by means of PWM (pulse width modulation) control so that the current value at the upper side of the trapezoid in the current waveform coincides with the set value I_{C}. Instead, the control unit 54 may use the voltage measured value [V] from the voltage measuring circuit 56 as the feedback signal in order to provide the similar PWM control.

In this manner, accobding to the AC inverter method, the fusing current I having a trapezoidal current waveform can flow between the two electrodes 24 and 26 in each fusing period T_{A}, thereby achieving a stabilized fusing quality as well as an improved thermal efficiency.

Referring then to FIG. 9, description will then be made of a working conditions schedule management function that is a major feature of this embodiment.

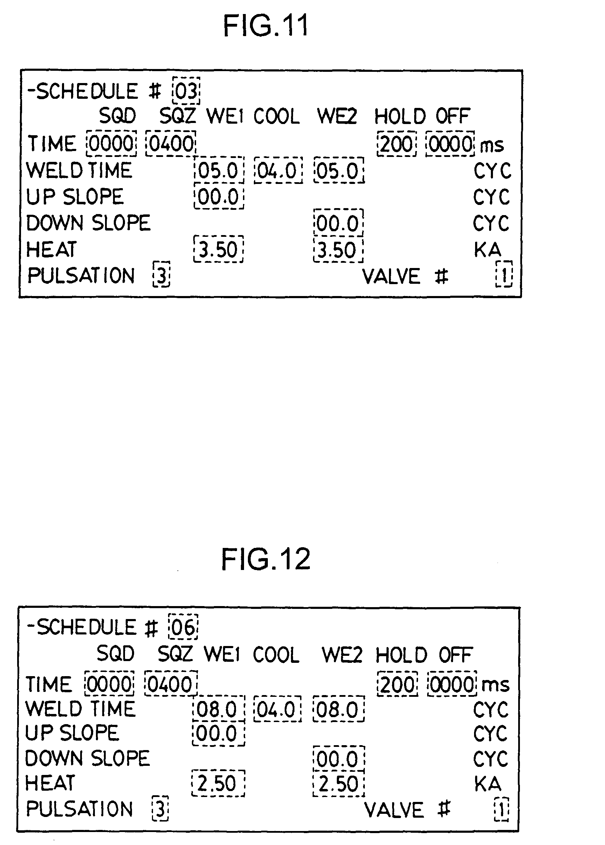

The "menu" screen not shown appears as an initial screen on the display 62 of the program unit 60. When "schedule" on the "menu" screen is selectively designated, the screen is switched to a "schedule" screen (initial values) as shown in FIG. 9. In FIG. 9, for ease of understanding, items capable of being set and entered are enclosed by broken lines on the screen, although the actual screen provides no display of such broken lines. Similar indications are imparted to FIGs. 11 to 14 which follow.

On the "schedule" screen of this embodiment shown in FIG. 9 there are selected, as settable working conditions for a set of work points, the squeeze delay time [SQD], the squeeze time [SQZ], the first fusing time [WE₁], the cooling time [COOL], the second fusing time [WE₂], the holding time [HOLD], the release time [OFF], and the number of times [PULSATION] of iteration of the second fusing time WE₂, all of which constitute the above sequence (see FIG. 7), as well as current values [HEAT] in the first and second fusing times WE₁ and WE₂, a force system [VALVE#], etc. These various working conditions are collectively managed by a schedule No. or a code [SCHEDULE#].

[UPSLOPE] and [DOWNSLOPE] on the "schedule" screen of FIG. 9 are setting items for upslope time and downslope time of the fusing current I. The upslope time is the time required when the current I gradually rises within the first fusing time [WE₁], and the downslope time is the time required when the current I gradually falls within the second fusing time [WE₂].

In this embodiment, only the current values [HEAT] of these working conditions are individually set for each of sections that will be described later, and all of the remaining conditions are given as common values to a set of work points (all sections).

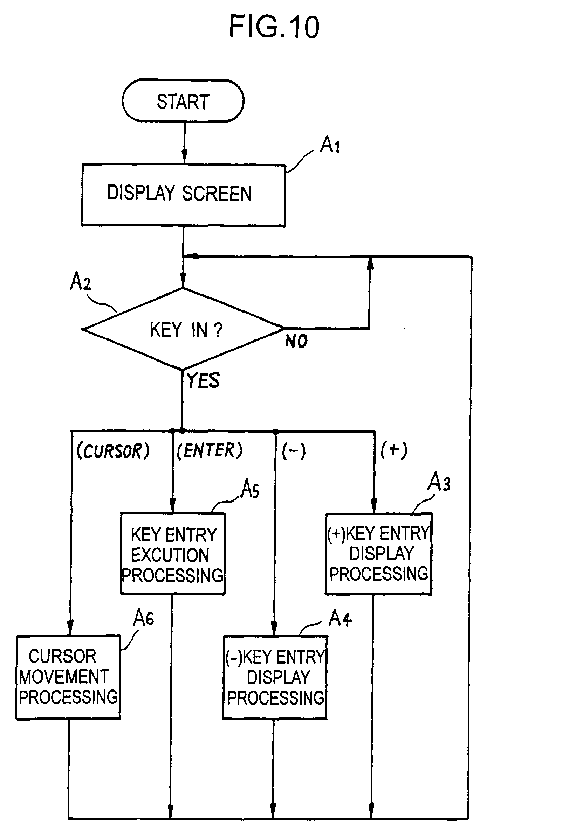

The user operates the cursor key 64 of the program unit 60 to move the cursor to each condition item capable of being set and entered. The user then acts on the plus (+) key 66 or the minus (-) key 68 to set the value to desired data and presses the enter key 70. In the procedure as shown in FIG. 10 the control unit 54 responds to the user' s key operation (step A₂) to perform entry display processings (steps A₃ and A₄) and execution processing (step A₅) and then stores entered set value data into the memory on a schedule basis.

FIGs. 11 and 12 show examples of setting on the "schedule" screen for a fusing work on the armature of FIG. 1A.

In the setting example of FIG. 11, the schedule No. [SCHEDULE#] is set to "03", with the squeeze delay time [SQD] being set to "0" ms, the squeeze time [SQZ] to 400" ms, the first fusing time [WE₁] to "5" cycles, the cooling time [COOL] to "4" cycles, the second fusing time [WE₂] to "5" cycles, the holding time [HOLD] to "200" ins, the release time [OFF] to "0" ms, the upslope time [UPSLOPE] to "0" cycle, the downslope time [DOWNSLOPE] to "0" cycle, the current reference value [HEAT] of the first fusing time WE₁ to "3.5" kA, the reference value [HEAT] of the second fusing time to "3.5" kA, the number of times [PULSATION] of iteration of the second fusing time to "3" times, and the force system [VALVE] to "1".

In the setting example of FIG. 12, the schedule No. [SCHEDULE#] is set to "06", with [SQD] being set to "0" ms, [SQZ] to 400" ms, [WE₁] to "8" cycle, [COOL] to "4" cycle, [WE₂] to "8" cycle, [HOLD] to "200" ms, [OFF] to "0" ms, [UPSLOPE] to "0" cycle, [DOWNSLOPE] to "0" cycle, [HEAT] to "2.5" kA, [PULSATION] to "3" times, and [VALVE] to "1".

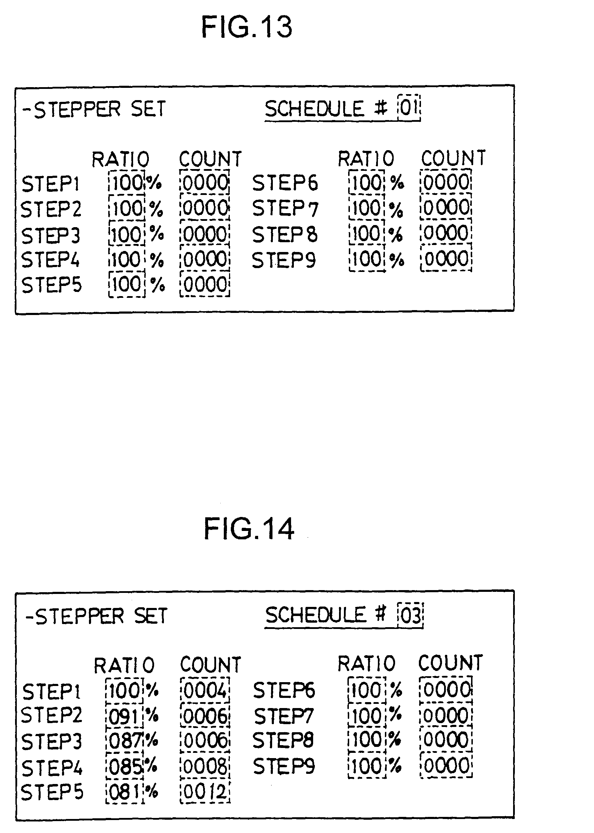

FIG. 13 shows a "stepper set" screen (initial values) of this embodiment. The "stepper set" screen can also be switched from the "menu" screen. On the "stepper set" screen, the values of the variable working conditions (current in case of this embodiment) on a set of work points are defined as ratios relative to the reference values.

Generally, in case similar fusing works are effected on a multiplicity of work points, it is preferred that the values of the working conditions (current in particular) which may largely influence the working qualities be varied for each appropriate section rather than for each work point so as to not only relieve the burden of the schedule management on the user but also to allow the actual application without any inconvenience.

In this embodiment, the electrode 24 for fusing work is made of a high heat-generating metal such as tungsten, so that a greater thermal energy is accumulated accordingly as the fusing work proceeds, ensuring an acquisition of the desired calorific value with a lesser electric power. For this reason, in case of the armature as shown in FIG. 1A, a control is preferred under which the maximum current is allowed to flow immediate after the start of one round, with the current value being stepwise reduced accordingly as the fusing work proceeds.

Into the schedule No. "SCHEDULE#" on the "stepper set" screen of FIG. 13 there is entered the number equal to the schedule No. "SCHEDULE#" on the "schedule" screen corresponding to that "stepper set" screen. [STEP1], [STEP2], [STEP3], ..., [STEP9] are identification codes imparted to the sections for predetermined sets of work points. "RATIO" column indicates set and entered values of current during the fusing time WR in each section, in the form of relative values (% values) relative to the reference values. [COUNT] column indicates set and entered count of work points W contained in each section. Note that [COUNT] for the section [STEP] out of use is set to its initial values (0).

In response to the key operations on the "stepper set" screen as well, the control unit 54 performs the entry display processing and entry execution processing in the same procedure as in FIG. 10, and stores each entered set value data as one of data belonging to that schedule into the memory.

FIG. 14 shows an example of setting on the "stepper set" screen for fusing work on the armature of FIG. 1A. This example of setting corresponds to the "schedule" screen in the setting example of FIG. 11 and hence has the schedule No. "SCHEDULE#" set to "03". Then, first to fifth sections [STEP1] to [STEP5] are provided for 36 work points.

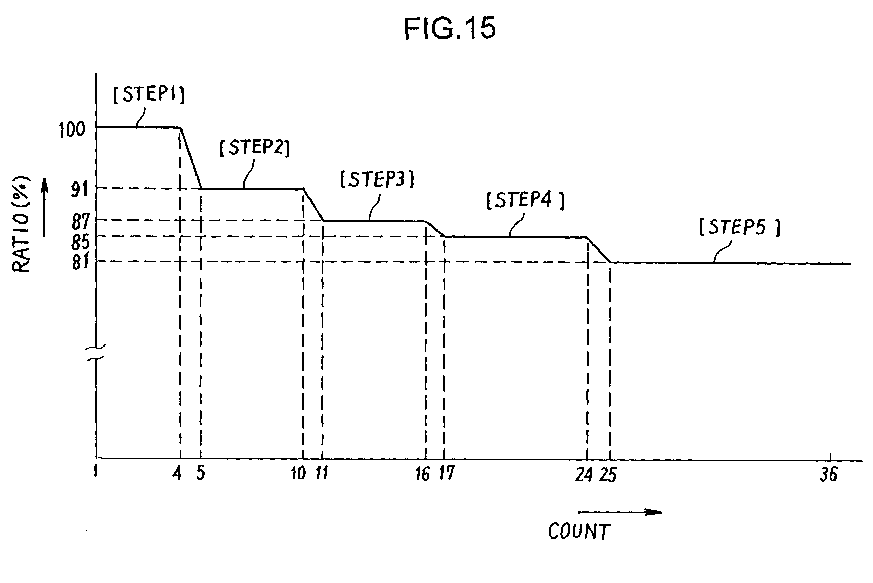

First four (first to fourth) work points W are allocated to the first section [STEP1] that has a relative current value 100%. Since the schedule No. "03" has the current reference value of 3.5 kA (see FIG. 11), the relative current value 100% results in 3.5 kA. Subsequent six (fifth to tenth) work points are allocated to the second section [STEP2] that has a relative current value 91% (approx. 3.2 kA). Subsequent six (eleventh to sixteenth) work points are allocated to the third section [STEP3] that has a relative current value 87% (approx. 3.0 kA). Subsequent eight (seventeenth to twenty-fourth) work points are allocated to the fourth section [STEP4] that has a relative current value 85% (approx. 3.0 kA). Subsequent (last) twelve (twenty-fifth to thirty-sixth) work points are allocated to the fifth section [STEP5] that has a relative current value 81% (approx. 2.8 k.A). The setting example of FIG. 14 is conceptually substituted by a diagram (graphic) as shown in FIG. 15.

It will be common in the general fusing works that the maximum current is imparted to the first section [STEP1] immediately after the start of work, and hence a setting method will also be feasible in which the current reference value [HEAT] on the "schedule" screen coincides with the maximum current value immediately after the start, with the relative current value in the first section [STEP1] being set to 100% (fixed value) at all times.

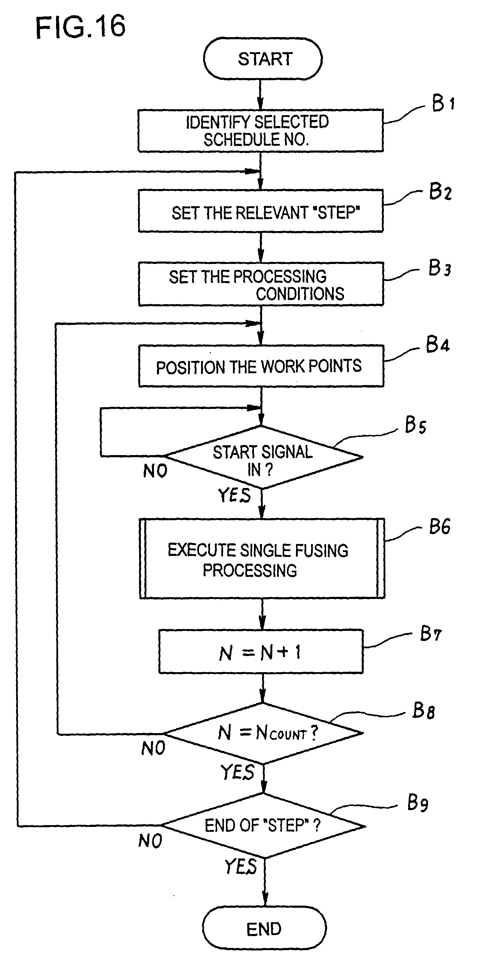

FIG. 16 shows a procedure of processings effected by the control unit 54 for the fusing work on a single workpiece in this embodiment.

In FIG. 16 the control unit first enters a schedule No. (code) desired by the user for a given workpiece (e.g., the armature of FIG. 1A) by means of the program unit 60 or any external unit (step B₁).

Then the control unit 54 identifies the thus entered schedule No. to read set values of various working conditions being managed by that schedule No. from the memory, and sets them into predetermined registers (steps B₂ and B₃). With respect to the work sections [STEP] in particular, the current set value and the count of work points are set for the first section [STEP1].

A first work point W is then set manually or by means of a conveying or positioning external device. In case of the armature of FIG. 1A, a first work point W (16i, 16j, 22) is positioned between the two electrodes 24 and 26. Then the control unit 54 waits for the input of a start signal ST effected by the external device or by the operator (step B₅) and, upon receipt of the signal ST, executes a single fusing work (step B₆).

After the completion of the single fusing work, the control unit 54 increments a section work point counter by one (step B₇). Then, until reaching the count (NCOUNT) of that section [STEP1] set on the "stepper set" screen, the fusing work is reiteratively carried out on the subsequent work point (16i, 16j, 22) in the same working conditions as the above (steps B₈ → B₄ to B₇ → B₈).

When the fusing work is thus complete on the predetermined count of work points W (16i, 16j, 22) belonging to the first section [STEP1], the control unit 54 makes a switching to the next (second) section [STEP2] and defines current set values and the count of work points in the second section [STEP2] (steps B₉, B₂, B₃). Except for the change of the current set values, the same fusing work as on the work points W (16i, 16j, 22) in the first section is effected on the work points (16i, 16j, 22) contained in the second section.

The subsequent sections [STEP3], [STEP4], ... are also subjected to the same fusing work as the above, after changing the current set values in the same manner as the above.

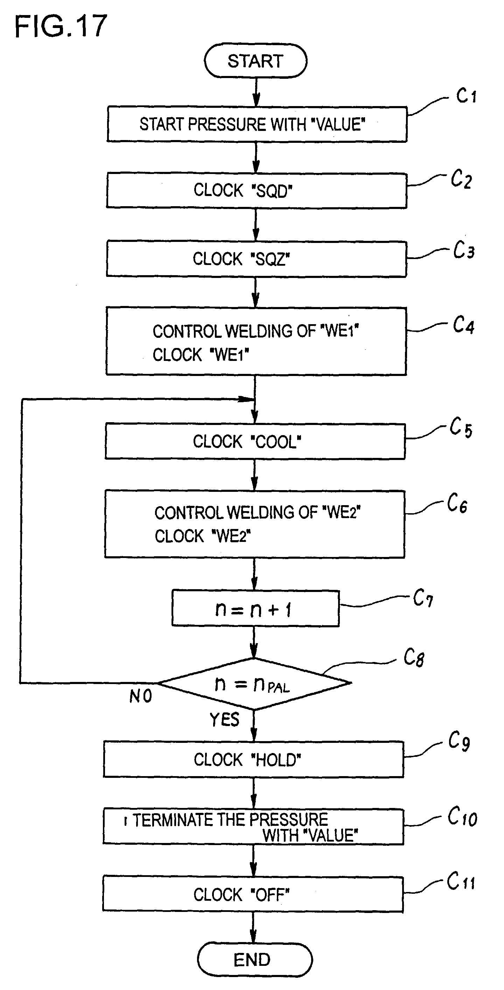

FIG. 17 shows a procedure of processings effected by the control unit 54 in a single fusing processing (step B₆). The sequence of this procedure corresponds to the operation sequence of FIG. 7. More specifically, the control unit 54 first causes the force device 78 to initiate the application of force on the work points W (16i, 16j, 22) (step C₁), and then clocks by their respective set times the squeeze delay time [SQD], the squeeze time [SQZ], the first fusing time [WE₁], the cooling time [COOL], the second fusing time [WE₂], the holding time [HOLD] and the release time [OFF] in the mentioned order (steps C₂ to C₁₁).

During the first fusing time [WE₁] and the second fusing time [WE₂], the control unit 54 provides a welding current control as shown in FIGs. 8A and 8B in order to flow the fusing current I (i₂) having an inverter AC waveform while allowing its current value to coincide with the set value of that section [STEP] (steps C₄, C₆). The cooling time [COOL] and the second fusing time [WE₂] are iterated by the set number of repetitions (nPAL) (steps C₅ to C₈).

In the fusing processing apparatus of this embodiment, as set forth hereinabove, various working conditions of the fusing work on a set (multiplicity) of work points are managed by a single schedule irrespective of the count of the work points. In particular, a set of work points on a given workpiece are divided into a desired number of sections so that the current to be fed during the fusing time is set for each section, and the current set values for all the sections are managed by a single schedule. Therefore, for example, even if it is desired to confer a diversity on the working quality of a single sort of workpieces, or even if it is desired to vary some of the working conditions for experimental work, or even in case different fusing works are effected by a single apparatus on multiple sorts of workpieces, so many schedules are not required and the user will be relieved of the burden of schedule management.

In the above embodiment, the working condition to be set independently for each section of the work points is the current value only. It will however be possible to set any other working conditions, e.g., the fusing time WE on a section-by-section basis. The set value in each section is not limited to the relative value (% value) relative to the reference value as in the above embodiment, but the setting and entry may be made using the unit of the set value itself (e.g., kA in case of the current value).

The fusing processing apparatus of the above embodiment is of an AC inverter type and is capable of preventing Peltier effect or wear of either of the electrodes, providing an improved thermal efficiency and ensuring a stabilized, high-quality fusing work. The present invention could however be implemented as a DC inverter or single-phase AC fusing processing apparatus. The fusing work of the present invention is applicable to various workpieces other than the DC motor armature described above.

According to the present invention, as set forth hereinabove, it is possible to enhance the efficiency of the schedule management for fusing works on a multiplicity of or multiple sorts of work points, to thereby improve the workability or productivity.

While illustrative and presently preferred embodiments of the present invention have been described in detail herein, it is to be understood that the inventive concepts may be otherwise variously embodied and employed and that the appended claims are intended to be construed to include such variations except insofar as limited by the prior art.

## Claims

1. A fusing processing method for sequentially performing fusing works of a set of work points on a workpiece, said fusing processing method comprising the steps of:
setting one or more schedules for collectively managing working conditions of said fusing works on said set of work points;
setting desired values of said working conditions for each of said set of work points on said schedule-by-schedule basis;
storing set values of said work conditions into a memory for each of said set schedules;
selecting desired one from said schedules for a set of work points on a given workpiece; and
reading set values of said working conditions corresponding to said selected schedule from said memory, to execute a fusing work on each of said set of work points on said given workpiece, in accordance with said working condition set values corresponding thereto.

2. A fusing processing apparatus for sequentially performing fusing works of a set of work points on a workpiece, said fusing processing apparatus comprising:
schedule setting means for setting one or more schedules for collectively managing working conditions of said fusing works on a predefined set of work points;
condition setting means for setting desired values of said working conditions for each of said set of work points on said schedule-by-schedule basis;
storage means for storing set values of said working conditions for each of said set schedules;
entry means for entering a schedule selection signal for selecting desired one of said schedules for a set of work points on a given workpiece; and
fusing means for reading set values of said working conditions corresponding to said selected schedule from said storage means, to execute a fusing work on each of said set of work points on said given workpiece, in accordance with said working condition set values corresponding thereto.

3. A fusing processing apparatus according to claim 2, wherein
said condition setting means include:
a first condition setting unit for allowing a setting of a common value on said set of work points with respect to a predetermined first working condition; and
a second condition setting unit for allowing a setting of separate values on said set of work points with respect to a predetermined second work condition.

4. A fusing processing apparatus according to claim 2, wherein
said condition setting means include:
a section defining unit for dividing said set of work points into a plurality of sections by any arbitrary number; and
a section condition setting unit for allowing a setting of a common value for each of said sections with respect to predetermined working conditions.

5. A fusing processing apparatus according to claim 2 or claim 4, wherein
said fusing means include:
a pair of electrodes at least one of which comes into pressure contact with metallic members disposed at their respective work points during a fusing work;
a rectifying circuit for rectifying an AC voltage of a commercial frequency into a DC voltage;
an inverter for converting said DC voltage output from said rectifying circuit during each current-supplying time for a fusing work, into a pulsed voltage of a high frequency;
inverter control means for dividing said current-supplying time into a plurality of unit fusing periods so that said high-frequency pulses are output with one polarity during odd-numbered unit fusing periods but that said high-frequency pulses are output with the other polarity during even-numbered unit current-supplying periods; and
a transformer having a primary winding electrically connected to output terminals of said inverter and having a secondary winding electrically connected to said pair of electrodes, said transformer serving to flow a secondary current with one polarity via said electrodes to said metallic members during odd-numbered unit current-supplying periods, said transformer serving to flow a secondary current with the other polarity via said electrodes to said metallic members during said even-numbered unit current-supplying periods.
